# EUROPÄISCHE PATENTSCHRIFT

(11) **EP 1 702 176 B1**
(45) Veröffentlichungstag und Bekanntmachung des Hinweises auf die Patenterteilung: **14.03.2012**
(21) Anmeldenummer: 04820847.4
(22) Anmeldetag: 26.11.2004
(51) Int. Cl.: F23C 6/04, F23C 9/08, F23R 3/34, F02C 1/08, F02C 3/34, F02C 6/00, F02C 6/18, C01B 3/38, F23C 13/00

(54) **WÄRMEKRAFTANLAGE MIT SEQUENTIELLER VERBRENNUNG UND REDUZIERTEM CO2-AUSSTOSS SOWIE VERFAHREN ZUM BETREIBEN EINER DERARTIGEN ANLAGE**
THERMAL POWER PLANT WITH SEQUENTIAL COMBUSTION AND REDUCED CO2 EMISSIONS AND METHOD FOR OPERATING A PLANT OF THIS TYPE
CENTRALE THERMIQUE A COMBUSTION SEQUENTIELLE ET A REJETS REDUITS DE CO2 ET PROCEDE DE FONCTIONNEMENT ASSOCIE

(30) Priorität: 23.12.2003 DE 10360951
(43) Veröffentlichungstag der Anmeldung: 20.09.2006
(73) Patentinhaber: Alstom Technology Ltd, 5400 Baden (CH)
(72) Erfinder: BÜCKER, Dominikus, 80338 München (DE); GRIFFIN, Timothy, CH-5408 Ennetbaden (CH); WINKLER, Dieter, 79787 Lauchringen (DE)
(86) Internationale Anmeldenummer: PCT/EP2004/053123
(87) Internationale Veröffentlichungsnummer: WO 2005/064232

(56) Entgegenhaltungen:
- EP-A- 0 795 685
- DE-A1- 4 303 174
- US-A- 6 161 385
- US-B1- 6 199 363
- US-B1- 6 530 226

## Beschreibung

### Technisches Gebiet

Die Erfindung bezieht sich auf eine Wärmekraftanlage, vorzugsweise eine Gasturbinenanlage, mit sequentieller Verbrennung und reduziertem CO₂-Ausstoß, die folgende über jeweils wenigstens einen Strömungskanal in Serie miteinander verbundene Komponenten aufweist: eine Verbrennungszuluft-Kompressoreinheit, eine erste Brennkammer, eine Hochdruckturbinenstufe, eine zweite Brennkammer sowie eine Niederdruckturbinenstufe, wobei die zweite Brennkammer und/oder die Niederdruckturbinenstufe zu Kühlzwecken mit einem Kühlgasstrom versorgbar sind. US. 6 199 363 B offenbart eine solche Wärmekraftanlage. Ferner wird ein Verfahren zum Betreiben eine Wärmekraftanlage der vorstehenden Art beschrieben.

### Stand der Technik

Im Rahmen des Klimaschutzes sind seit geraumer Zeit Bestrebungen im Gange die Emission von Treibhausgasen, insbesondere von CO₂ in die Atmosphäre zu vermindern. Hierzu sind bereits eine Vielzahl von Vorstößen unternommen worden, durch die eine teilweise bis vollständige Abscheidung des bei der Verbrennung fossiler Brennstoffe erzeugten CO₂ erreicht wird. Besonderes Interesse gilt dabei der Erzeugung elektrischer Energie durch Befeuerung von Brennkammern zum Antrieb von Gasturbinenanlagen, deren Abgasemissionsvermögen einen nicht unbeträchtlichen Anteil an dem antropogen in die Atmosphäre ausgebrachten Emissionsvolumen ausmacht. Im Bestreben den durch Gasturbinenanlagen verursachten CO₂-Austrag in die freie Atmosphäre zu verringern, sind Techniken zur CO₂-Abscheidung aus den Abgasströmen von Gasturbinenanlagen bekannt, die im Wege einer Rezirkulation des Abgasstromes eine CO₂ Abscheidung unter möglichst hohem Druck bewirken. Grundsätzlich gilt, je höher der CO₂-Partialdruck im Abgasstrom, umso besser ist die Effizienz der CO₂-Abscheidung. Zur Druckerhöhung des Abgasstromes wird dieser in an sich bekannter Weise mittels der Verbrennungszuluft-Kompressoreinheit der Gasturbinenanlage komprimiert, wobei das rezirkulierte Abgas mit Frischluft verdünnt wird, wodurch einerseits der Sauerstoffgehalt der im Wege der Kompressoreinheit zu verdichtenden Verbrennungszuluft als auch die CO₂-Konzentration des rezirkulierten Abgases reduziert werden. Durch den geringeren Sauerstoffgehalt der durch die rezirkulierte Abgasführung entstehenden komprimierten Mischluft, die im weiteren Strömungsverlauf der Gasturbinenanlage dem Brenner zugeführt wird, in dem die Mischluft durch Beimischung von Brennstoff in ein zündfähiges Brennstoff Luftgemisch überführt wird und letztlich in der Brennkammer zur Zündung gebracht wird, kommt es insbesondere in Fällen zu so genannten Verbrennungsinstabilitäten, in denen die Verbrennung innerhalb der Brennkammer ohne jeglichen Sauerstoffüberschuss erfolgt. Derartige Verbrennungsinstabilitäten führen einerseits zu hohen CO-Emissionen und andererseits zur Ausbildung thermoakustischer Schwingungen, die den Betrieb der Gasturbinenanlage stark beeinträchtigen können. Andererseits führt der durch die Mischung mit Verbrennungszuluft verringerte CO₂-Gehalt in der rezirkulierten, verdichteten Abgasströmung zu einer geringeren Effizienz der CO₂-Abscheidung. Hierzu soll die Erfindung Abhilfe schaffen und einen Weg zum Betreiben von Gasturbinenanlagen aufzeigen, mit dem eine effiziente CO₂-Abscheidung aus der rezirkulierten Abgasströmung möglich wird, ohne dabei das stabile Brennerverhalten nachhaltig zu beeinflussen.

### Darstellung der Erfindung

Der Erfindung liegt die Aufgabe zugrunde, eine Wärmekraftanlage vorzugsweise einer Gasturbinenanlage mit sequentieller Verbrennung und reduziertem CO₂-Ausstoß gemäß dem Oberbegriff des Anspruches 1 derart weiterzubilden, dass mit einem möglichst geringen, anlagetechnischen Aufwand eine möglichst effiziente CO₂-Abscheidung aus dem Abgasstrom einer Gasturbinenanlage möglich wird, ohne dabei das Betriebsverhalten und insbesondere das Emissionsverhalten der Gasturbinenanlage nachhaltig zu beeinträchtigen. Die erfindungsgemäße Maßnahme Soll überdies die Möglichkeit der Retrofitierbarkeit an bereits in Betrieb befindlichen Gasturbinen gestatten. Ferner gilt es, ein entsprechendes Verfahren zum Betreiben einer diesbezüglichen Gasturbinenanlage anzugeben.

Die Lösung der der Erfindung zugrunde liegenden Aufgabe ist im Anspruch 1 angegeben. Gegenstand des Anspruches 16 ist ein Verfahren zum Betreiben einer Wärmekraftanlage, vorzugsweise Gasturbinenanlage. Den Erfindungsgedanken vorteilhaft weiterbildende Merkmale sind Gegenstand der Unteransprüche und insbesondere der Beschreibung unter Bezugnahme auf die Ausführungsbeispiele zu entnehmen.

Erfindungsgemäß ist eine Wärmekraftanlage, vorzugsweise Gasturbinenanlage mit sequentieller Verbrennung und reduziertem CO₂Ausstoß, die folgende über jeweils wenigstens einen Strömungskanal in Serie miteinander verbundene Komponenten aufweist: eine Verbrennungszuluft-Kompressoreinheit, eine erste Brennkammer, eine Hochdruckturbinenstufe, eine zweite Brennkammer sowie eine Niederdruckturbinenstufe, wobei die zweite Brennkammer und/oder die Niederdruckturbinenstufe zu Kühlzwecken mit einem Kühlgasstrom versorgbar sind, derart weitergebildet, dass eine Rezirkulationsleitung vorgesehen ist, die wenigstens einen Teil eines aus der Niederdruckturbinenstufe austretenden Abgasstromes einer Kühleinheit zuführt. Wenigstens ein Teil des aus der Kühleinheit austretenden komprimierten Abgasstromes wird als Kühlgasstrom über eine Kühlleitung der zweiten Brennkammer und/oder der Niederdruckturbinenstufe zu Kühlzwecken zugeführt, wodurch die mit den innerhalb der zweiten Brennkammer entstehenden Heißgasen exponierten Gasturbinenkomponenten effektiv gekühlt werden können. Überdies ist in der Kühlleitung eine CO₂-Abscheideeinheit vorgesehen, die zumindest Teile von CO₂ aus dem Kühlgasstrom separiert. Die Erfindung baut somit im Wesentlichen auf einer Gasturbinenanlage mit sequentieller Verbrennung auf, bei der das rezirkulierte Abgas über eine entsprechend vorgesehene Verdichtereinheit auf einen Zwischendruck komprimiert wird, auf dem die CO₂-Separation erfolgt und der es überdies gestattet, den CO₂ abgereicherten Abgasstrom als Kühlgasstrom auf dem Zwischendruckniveau zu Zwecken der Kühlung in die zweite Brennkammer sowie vorzugsweise auch in die Niederdruckturbinenstufe einzuspeisen. Zu Zwecken einer effektiven Kühlung wird der vorverdichtete, rezirkulierte Abgasstrom vor Eintritt in die CO₂-Abscheideeinheit durch einen Kühler geleitet. Der zur Kühlung der zweiten Brennkammer benutzte Teil des Kühlgasstroms wird durch die sequentielle Verbrennung wieder auf die Arbeitstemperatur der Niederdruckturbine erwärmt, wodurch kein Wirkungsgradverlust entsteht. Weitere Einzelheiten können den Ausführungsbeispielen unter Bezugnahme auf die folgenden Figuren entnommen werden.

In einer bevorzugten Ausführungsform sieht die Befeuerung der zweiten Brennkammer, der so genannten sequentiellen Brennerstufe, den Einsatz einer partiellen Oxidation vor, bei der zur Einstellung einer stöchiometrischen Verbrennung die zweite Brennkammer mit einer Oxidationseinheit kombiniert ist, durch die Brennstoff zur Befeuerung der zweiten Brennkammer wenigstens teilweise unter Freisetzung von Wasserstoff oxidiert wird und zumindest mit dem als Kühlgas dienenden CO₂ abgereicherten Abgasstrom unter Ausbildung eines stöchiometrischen Brennstoff-Sauerstoffgemisches zur Zündung gebracht wird. Je nach vorhandenem Sauerstoffgehalt innerhalb des gekühlten, CO₂-abgereicherten Abgasstromes kann anteilsmäßig die aus der Hochdruckturbinenstufe austretenden Heißgase dem Kühlgasstrom beigemischt werden. Auch in diesem Zusammenhang stehende, weitere Einzelheiten können den im Weiteren beschriebenen Ausführungsbeispielen entnommen werden.

Grundsätzlich ist es möglich, die Verdichtung des rezirkulierten Abgasstromes im Rahmen eines Niederdruckkompressorteils der Verbrennungszuluft-Kompressoreinheit vorzunehmen, wobei jedoch eine Zumischung mit Frischluft die Folge ist, mit den eingangs beschriebenen Nachteilen. In einer besonders vorteilhaften Ausführungsform dient eine extra für die Komprimierung des rezirkulierten Abgasstromes vorgesehene Abgasverdichtereinheit zur Drucksteigerung des Abgasstromes auf ein bestimmtes Zwischendruckniveau zur weiteren Einspeisung als Kühlgasströmung in die vorstehend beschriebene sequentielle Verbrennereinheit sowie in die Niederdruckturbinenstufe.

Somit zeichnet sich das erfindungsgemäße Verfahren zum Betreiben einer Wärmekraftanlage mit sequentieller Verbrennung und reduziertem CO₂-Ausstoß dadurch aus, dass wenigstens ein Teil des aus der Niederdruckturbinenstufe austretenden Abgases rezirkuliert, verdichtet und einer CO₂-Abscheidung zur Gewinnung von CO₂ zugeführt wird und dass der CO₂ abgereicherte Abgasstrom zugleich auch als Kühlgasstrom zur Kühlung der zweiten Brennkammer und/oder der Niederdruckturbinenstufe bereitgestellt wird.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: an sich bekannte Gasturbine mit sequentieller Verbrennung (Stand der Technik),
- Fig. 2-7: schematisierte Prozessschemata für erfindungsgemäß ausgebildete Gasturbinenanlage mit sequentieller Verbrennung und einem CO₂-reduziertem Abgasstrom.

### Wege zur Ausführung der Erfindung, gewerbliche Verwendbarkeit

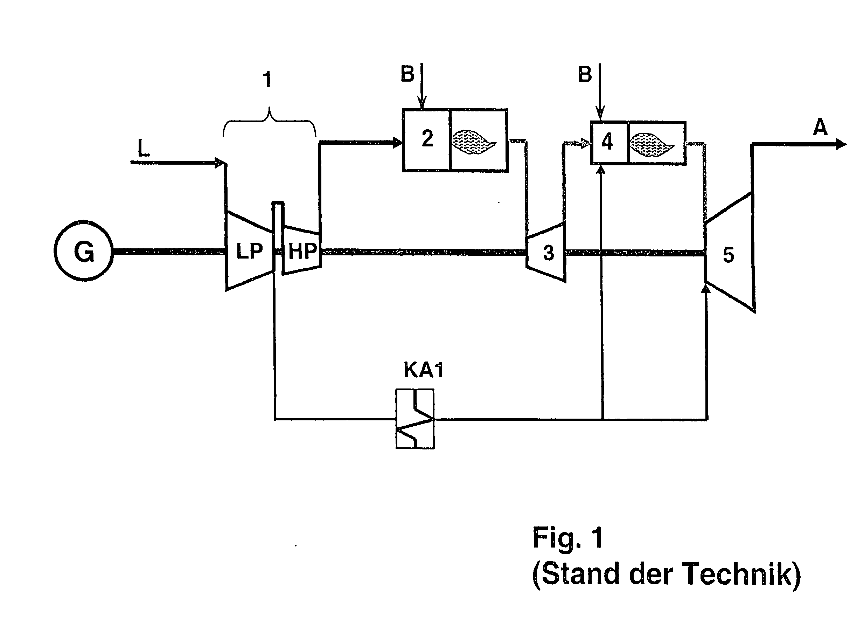

In Fig. 1 ist ein schematisiertes vereinfachtes Prozessschema einer an sich bekannten Gasturbinenanlage mit sequentieller Verbrennung dargestellt. Die Gasturbinenanlage besteht im Wesentlichen aus einer Hochdruckturbinenstufe 3 sowie einer Niederdruckturbinenstufe 5 mit einer dazwischen liegenden sequentiellen Verbrennung 4. Zuluft L wird in einer Verbrennungszuluft-Kompressoreinheit 1 über zwei Kompressorstufen LP, HP auf ein hohes Druckniveau verdichtet In einer Standardbrennkammer 2 wird diese Luft mit Brennstoff B vorgemischt und verbrannt. Das in der Brennkammer 3 erzeugte Heißgas wird anschließend in der Hochdruckturbinenstufe 3 auf den Zwischendruck entspannt. Da das aus der ersten mageren Vormischverbrennung stammende Heißgas noch mehr als die Hälfte seines ursprünglichen Sauerstoffgehaltes enthält, wird nochmals Brennstoff B unmittelbar vor einer speziellen sequentiellen Brennkammer 4 zugemischt und zur Zündung gebracht. Dieses nochmals erhitzte Heißgas entspannt sich stromab in einer Niederdruckturbinenstufe 5 auf Atmosphärendruck, wobei letztlich die entspannten Heißgase in Form eines Abgasstromes A in die freie Atmosphäre freigesetzt werden. In besonders vorteilhafter Weise wird ein Teil der in den Niederdruckkompressorteil LP vorverdichteten Verbrennungszuluft abgezweigt und über eine Kühleinheit KA1 gekühlt und zu Kühlzwecken der sequentiellen Brennkammer 4 sowie auch der Niederdruckturbinenstufe 5 zugeleitet

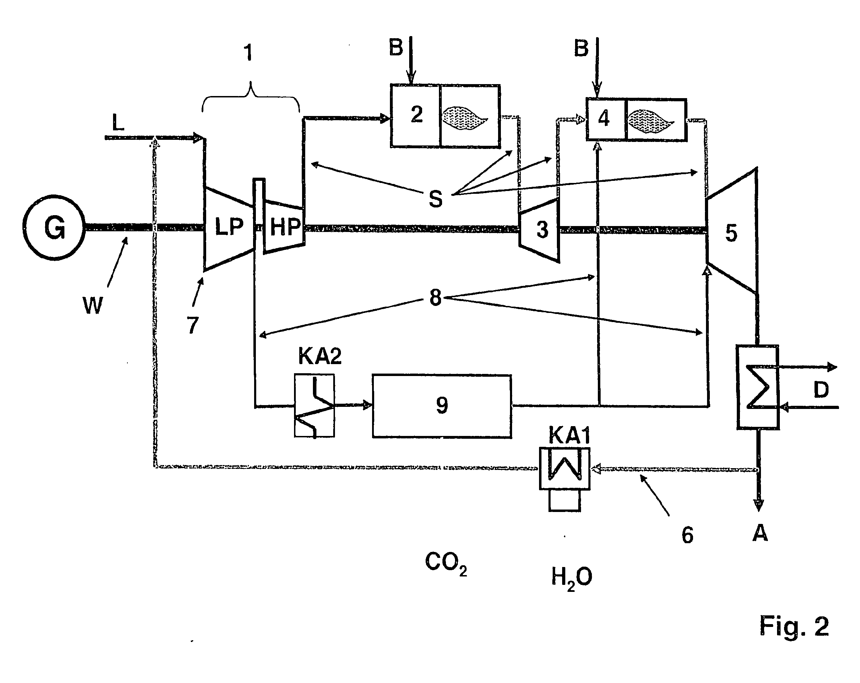

Ausgehend von der vorstehend beschriebenen, an sich bekannten gestuft betriebenen Gasturbinenanlage mit sequentieller Verbrennung wird gemäß Ausführungsbeispiel in Fig. 2 das aus der Niederdruckturbinenstufe 5 austretende Abgas A über eine Rezirkulationsleitung 6 in den Zuluftstrom der Niederdruckkompressoreinheit 7 rezirkuliert in der das rezirkulierte Abgas mit der Zuluft gemischt und auf ein Zwischendruckniveau verdichtet wird. In vorteilhafter Weise tritt das rezirkulierte Abgas A längs der Rezirkulationsleitung 6 durch eine Wärmetauschereinheit D hindurch, an der ein Wärmeübergang zu einem Dampfkreislauf, beispielsweise zum Antrieb einer nicht weiter dargestellten Dampfturbine, erfolgt. Des Weiteren sieht die Rezirkulationsleitung 6 eine Kühlereinheit KA1 vor, in der zum einen das Abgas gekühlt und im Wege einer Kondensation entfeuchtet wird.

Das durch den Niederdruckkompressorteil LP auf Zwischendruck vorverdichtete Abgas gelangt nun über eine so genannte Kühlleitung 8 in eine CO₂-Abscheideeinheit 9, in der aufgrund des vorherrschenden hohen Zwischendruckniveaus eine durchaus effiziente CO₂-Abscheidung erfolgt. In vorteilhafter Weise ist stromauf zur CO₂-Abscheideeinheit 9 eine weitere Kühlereinheit KA2 vorgesehen. Für die CO₂-Abscheideeinheit eignen sich an sich bekannte Abscheidevorrichtungen wie beispielsweise chemische Absorption, z.B. auf Basis von MEA oder physikalisch wirkende Abscheider, z.B. auf Basis von Membranen. Mit Hilfe derartiger CO₂-Abscheideeinheiten können CO₂-Separatorwirkungen zwischen 70 und 99% erzielt werden. Der aus der CO₂-Abscheideeinheit 9 austretende CO₂ abgereicherte Abgasstrom wird im Weiteren zu Kühlzwecken der sequentiellen Brennereinheit 4 sowie der Niederdruckturbinenstufe 5 zugeleitet. Wobei der zur Kühlung der zweiten Brennkammer benutzte Teil des Kühlgasstroms durch die sequentielle Verbrennung wieder auf die Arbeitstemperatur der Niederdruckturbine erwärmt wird, wodurch kein Wirkungsgradverlust entsteht.

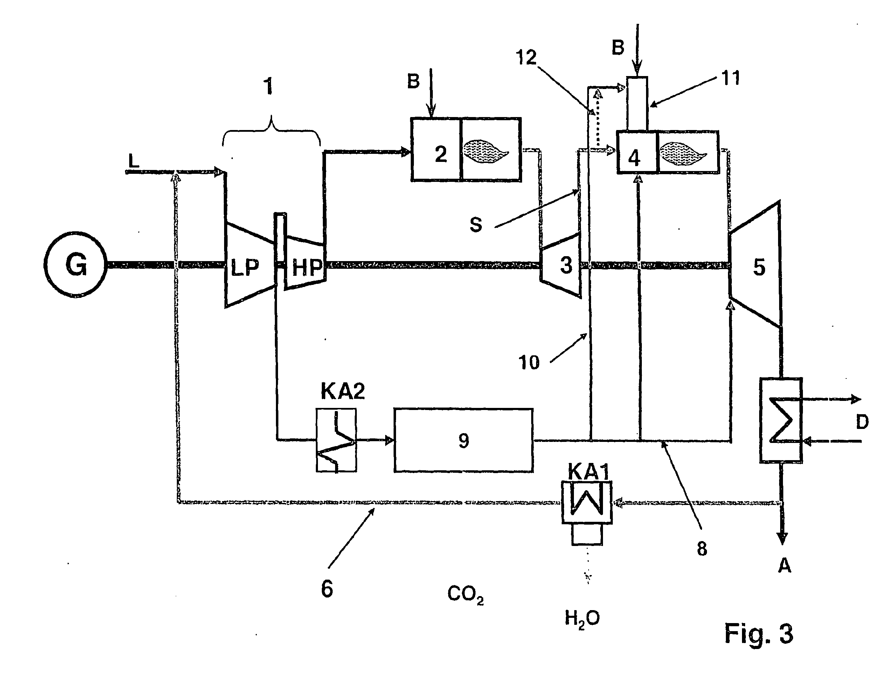

Solange die sequentielle Verbrennerstufe 4 mit Sauerstoffüberschuss betrieben wird, bildet sich eine aerodynamisch stabile Vormischflammenfront innerhalb der Brennkammer aus, d.h. der Verbrennungsvorgang erfolgt stabil. Wird jedoch die rezirkulierte Abgasmenge in einem Maße erhöht, bei dem der Sauerstoffgehalt in der der ersten Brennkammer 2 zugeführten, hochverdichteten Verbrennungsluft gerade noch zur vollständigen Verbrennung des zugeführten Brennstoffes B ausreicht, so erfolgt die Verbrennung in der sequentiellen Verbrennerstufe 4 bei einem noch geringeren Eintrittsauerstoffgehalt ohne Sauerstoffüberschuss. Dieser Zustand ist zwar aus Gründen eines besonders hohen CO₂-Abscheidegrades bei einer maximal möglichen Abgasrezirkulation besonders wünschenswert. Zudem kommt, dass bei einer derartigen Betriebsweise der minimale Sauerstoffgehalt innerhalb der jeweiligen Verbrennungszonen zu sehr geringen NOx-Emissionswerten führt. Jedoch treten bei diesen Verbrennungsbedingungen erfahrungsgemäß Verbrennungsinstabilitäten auf, beispielsweise in Form thermoakustischer Schwingungen, hohen CO-Emissionen sowie auch dem plötzlichen Verlöschen der Vormischflamme. Um diesen negativen Verbrennungserscheinungen entgegen zu treten und zugleich die beschriebenen Vorteile einer Verbrennung unter stöchiometrischen Sauerstoffbedingungen nutzen zu können, bedient man sich der so genannten partiellen Oxidation. In diesem Zusammenhang sei auf das Ausführungsbeispiel in Fig. 3 verwiesen, in dem ein Prozessschema für eine Gasturbinenanlage dargestellt ist, die mit Ausnahme einer an der sequentiellen Verbrennerstufe 4 vorgenommenen Modifikation im Übrigen mit dem in Fig. 2 dargestellten Prozessschema identisch ist. Bezüglich Erklärungen von Bezugszeichen, die bereits in Fig. 2 erläutert worden sind, wird, um Wiederholungen zu vermeiden, auf das entsprechende vorstehende Ausführungsbeispiel verwiesen.

Es sei im Weiteren angenommen, dass die Beimischung des rezirkulierten Abgases in die Verbrennungszuluft L in einem Maße erfolgt, bei dem der Sauerstoffgehalt in der Zuluft der Brennkammer 2 gerade noch zur Verbrennung des zugeführten Brennstoffes B ausreicht. Wie vorstehend erläutert erfolgt die sequentielle Verbrennung in der Brennkammer 4 unter Sauerstoffmangel. Um die damit verbundenen, vorstehend beschriebenen Nachteile zu vermeiden, wird Brennstoff B zunächst unter Sauerstoffmangel im Rahmen einer so genannten Oxidationseinheit 11 zur Reaktion gebracht. Die Oxidationseinheit 11 ist in vorteilhafter Weise als Katalysatoreinheit ausgeführt, der zum einen der zu oxidierende Brennstoff B und zum anderen eine Sauerstoffmenge im Bereich zwischen 20 und 75% des theoretischen Sauerstoffbedarfes für eine vollständige Oxidation des Brennstoffes zugeführt wird. Die zugeführte Sauerstoffmenge erfolgt über die Zuleitung 10, die einen Teil des COᵣabgereicherten Abgases aus der Kühlleitung 8 abzweigt. Sollte der im CO₂-abgereicherten Abgasstrom enthaltene Sauerstoffgehalt nicht den geforderten Sauerstoffgehalt zur Durchführung einer partiellen Oxidation entsprechen, so können zusätzlich Teile des aus der Hochdruckturbinenstufe 3 austretenden Heißgase über die Zuleitung 12 im CO₂-abgereicherten Abgasstrom zur Einspeisung in die Oxidationsstufe 11 beigemischt werden.

Durch die partielle Oxidation innerhalb der Oxidationsstufe 11 wird aus den Kohlenwasserstoffverbindungen des Brennstoffes B ein Teil des Wasserstoffes abgetrennt und liegt nach der partiellen Oxidationsstufe 11 als freier Wasserstoff in der heißen Austrittsmischung vor Eintritt in die sequentielle Brennstufe 4 vor. Werden nun die aus der Hochdruckturbinenstufe 3 austretenden Heißgase mit dieser Wasserstoffanteile enthaltenden Gasmischung der sequentiellen Brennstufe 4 zugeführt, so kommt es durch die hohe Temperatur und die hohe Reaktivität des enthaltenen Wasserstoffes zu einer spontanen Reaktion und dem vollständigen Ausbrand des in Form von Wasserstoff, CO und restlichen Kohlenwasserstoffen noch vorhandenen Brennstoffes. In besonders vorteilhafter Weise führt die hohe Reaktivität des Brennergemisches zu einer sich stabil ausbildenden Verbrennung innerhalb der sequentiellen Brennstufe 4, so dass die eingangs erwähnten Nachteile hinsichtlich des Auftretens von thermoakustischen Schwingungen, hohen CO-Emissionen sowie dem Verlöschen der Vormischbrennerflamme vollständig vermieden werden können.

In einer vorteilhaften Ausführungsform zur Durchführung der partiellen Oxidation eignet sich der Einsatz einer Brennstoffzuführungslanze innerhalb der sequentiellen Brennstufe 4, innerhalb der die zur Freisetzung von Wasserstoff erforderliche Reaktion des zugeführten Brennstoffes B durch den Einsatz eines Katalysators erfolgt.

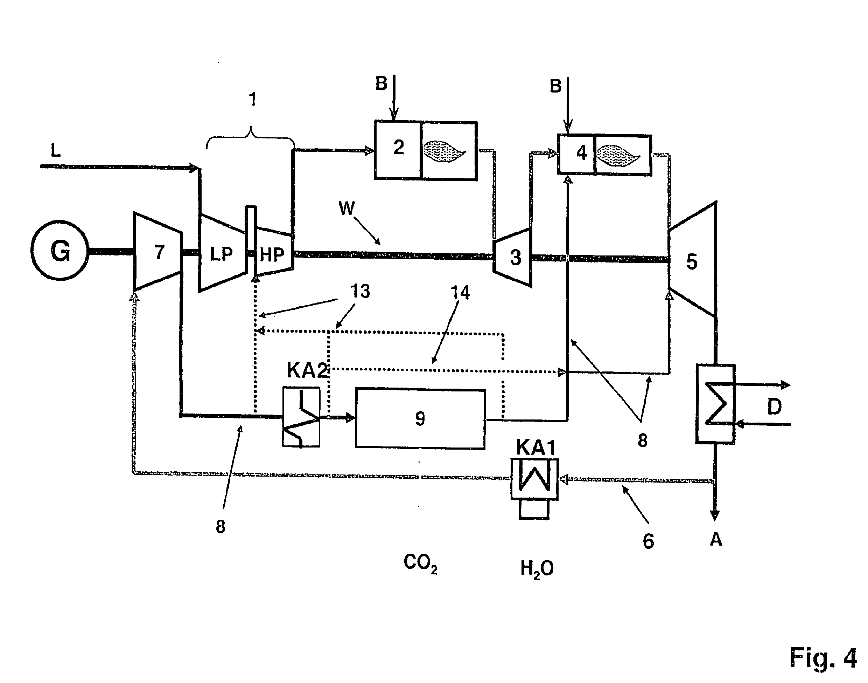

Zwar dienen die vorstehend beschriebenen Maßnahmen zur Optimierung der in den Brennkammern 2 und 4 erfolgenden Verbrennungsprozesse, doch gilt es erfindungsgemäß in erster Linie, den CO₂-Gehalt der von der Gasturbinenanlage freigesetzten Abgase zu reduzieren. Die erfindungsgemäß in die Kühlleitung 8 eingesetzte CO₂-Abscheideeinheit 9 arbeitet umso effektiver, je größer die der Abscheideeinheit zugeführte CO₂-Konzentration in der Zuströmung ist. Um hierfür Sorge zu tragen, erfolgt in den Ausführungsbeispielen gemäß der Fig. 2 und 3 eine Vorverdichtung des rezirkulierten Abgases mittels des Niederdruckkompressorteils LP der Verbrennungszuluft-Kompressoreinheit 1. Nachteilhaft bei dieser Ausführungsform ist es jedoch, dass das rezirkulierte Abgas mit der zugeführten Zuluft L vermischt und somit gemeinsam innerhalb des Niederdruckkompressorteils LP verdichtet wird. Somit gelangt ein verdünnter, vorverdichteter Abgasstrom in die CO₂-Abscheideeinheit 9. Um diesen "Verdünnungseffekt" zu vermeiden, wird unter Bezugnahme auf das Ausführungsbeispiel in Fig. 4 vorgeschlagen, einen separaten Kompressor für das rezirkulierte Abgas zu verwenden. Hierzu ist auf einer gemeinsamen Welle W, längs der der Verbrennungszuluft-Kompressoreinheit 1 sowie die Hoch- und Niederdruckturbinenstufe 3, 5 angeordnet sind, eine separate Abgasverdichtereinheit 7 vorgesehen, in der ausschließlich das rezirkulierte Abgas über die Rezirkulationsleitung 6 komprimiert und über die Kühlereinheit KA2 der CO₂-Abscheideeinheit 9 zugeführt wird. Auf diese Weise bleibt die hohe CO₂-Konzentration im Abgas erhalten, wodurch eine Effizienzsteigerung der CO₂-Abscheideeinheit 9 erzielt werden kann. Im Falle einer stöchiometrischen Betriebsweise des Verbrennungsprozesses, wie vorstehend beschrieben, enthält das Abgas keinen Sauerstoff mehr und kann infolgedessen auch nicht mehr zur Verbrennung, beispielsweise im Wege einer partiellen Oxidation, genutzt werden. Somit sieht das Prozessschema des Ausführungsbeispiels in Fig. 4 keine partielle Oxidationsstufe vor, vielmehr wird das CO₂-reduzierte Abgas nur noch zu Kühlzwecken innerhalb der sequentiellen Verbrennerstufe 4 sowie der Niederdruckturbinenstufe 5 genutzt. Zur Einstellung der stöchiometrischen Betriebsweise der Verbrennungsprozesse innerhalb der Brennkammern 2, 4 sind Rückführleitungen 13 vorgesehen, über die das im Rahmen der Abgasverdichtereinheit 7 komprimierte rezirkulierte Abgas entweder direkt, gekühlt oder CO₂-reduziert nach Durchtritt durch die CO₂-Abscheideeinheit 9 der Hochdruckkompressorstufe HP zugeführt wird, zu Zwecken einer dosierten Beimischung zur Zuluft L.

Optional dient eine Umgehungsleitung 14 zur Überbrückung der CO₂-Abscheideeinheit 9 eines Teils des verdichteten und gekühlten rezirkulierten Abgasstromes in Fällen, in denen der rezirkulierte Abgasstrom die Aufnahmekapazität der CO₂-Abscheideeinheit 9 übersteigt.

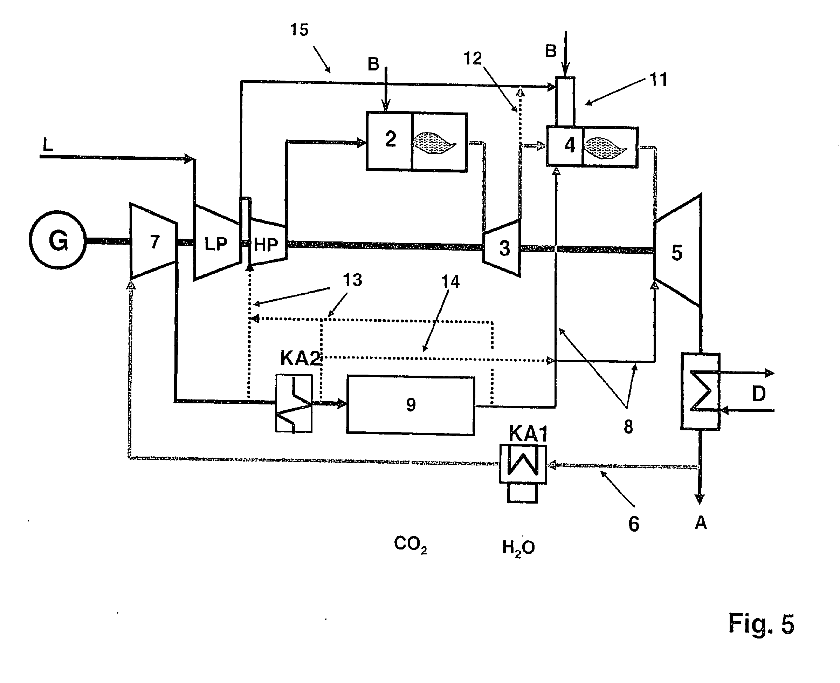

In Fig. 5 ist ein weiteres Ausführungsbeispiel dargestellt, das vergleichbar mit dem Ausführungsbeispiel in Fig. 4 eine separate CO₂-Verdichterstufe 7 vorsieht, zusätzlich erfolgt die sequentielle Verbrennung im Wege einer partiellen Oxidation, wobei die der partiellen Oxidationsstufe 11 zugeführte Sauerstoffmenge über eine Bypassleitung 15 erfolgt, die stromab zum Niederdruck-Kompressorteil LP eine gezielte Ableitung eines Teils der vorkomprimierten Zuluft L in die Oxidationseinheit 11 ermöglicht, in der der Brennstoff unter Freisetzung von Wasserstoff partiell oxidiert wird. Ebenso wäre es möglich, alternativ oder in Kombination zur Bypassleitung 15 über die Zuleitung 12 aus der Hochdruckturbinenstufe 3 austretende Heißgase der Oxidationseinheit 11 zur Durchführung der partiellen Oxidation des Brennstoffes B zu nutzen.

Alle vorstehend beschriebenen Ausführungsbeispiele betreffen Gasturbinenanlagen, längs deren einzige Welle W die Generatoreinheit G, die Verbrennungszuluft-Kompressoreinheit 1 sowie die Hochdruckturbinenstufe 3 und Niederdruckturbinenstufe 5 angeordnet sind. In Fällen, in denen das rezirkulierte Abgas in einer separaten Abgasverdichtereinheit 7 komprimiert wird, ist auch diese längs der gemeinsamen Welle W angebracht.

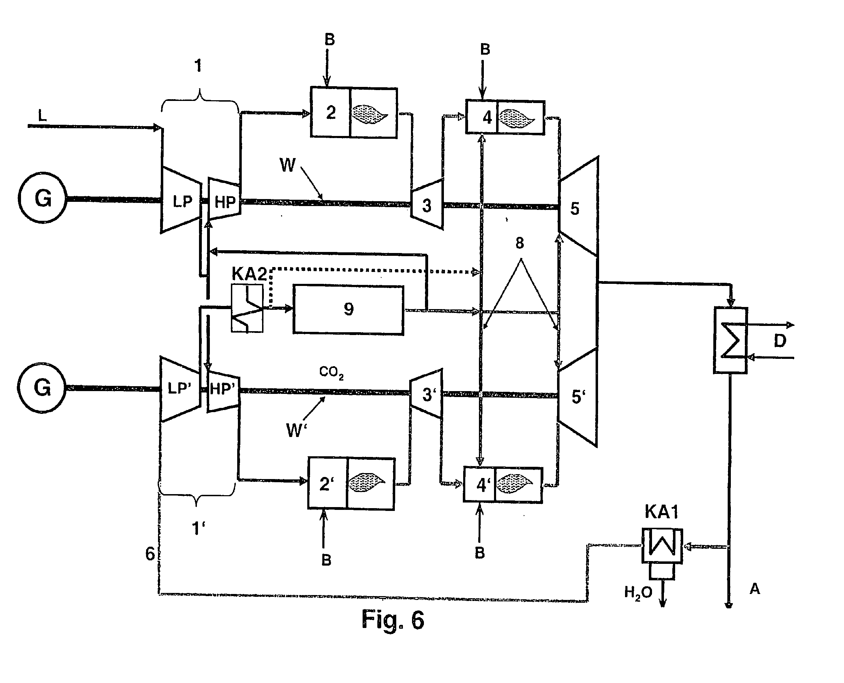

Nicht zuletzt aus Gründen einer leichteren Retrofitierbarkeit der erfindungsgemäßen Maßnahme an bereits in Betrieb befindlichen Gasturbinenanlagen, bietet es sich an, die Verdichtereinheit, mit der das rezirkulierte Abgas komprimiert wird, auf einer getrennt angetriebenen Welle anzubringen. Ein Prozessschema einer derartigen Gasturbinenanlage ist in Fig. 6 dargestellt. Legt man zunächst einmal das in Fig. 2 beschriebene Prozessschema zugrunde, so unterscheidet sich die Gasturbinenanlage gemäß Fig. 6 dadurch, dass zusätzlich eine zweite Welle W' vorgesehen ist, die von einer getrennten Gasturbine, bestehend aus dem Hochdruckturbinenteil 3' und Niederdruckturbinenteil 5' angetrieben wird. Der Hochdruckturbinenteil 3' sowie Niederdruckturbinenteil 5' wird jeweils mit Heißgasen beschickt, die jeweils aus den Brennkammern 2' und 4' austreten. Zur Versorgung der Brennkammern 2' und 4' mit der für die Verbrennung erforderlichen Verbrennungszuluft wird die Hochdruckkompressorstufe HP' gleichfalls wie die Hochdruckkompressorstufe HP von der vorkomprimierten Zuluft L, die aus der Niederdruckkompressorstufe LP der Verbrennungszuluft-Kompressoreinheit 1 herrührt, versorgt. Hingegen wird das rezirkulierte Abgas, das über die Rezirkulationsleitung 6 der Niederdruckkompressorstufe LP' der Verbrennungszuluft-Kompressoreinheit 1' zugeführt und auf einen Zwischendruck komprimiert wird nicht der Verbrennungszuluft beigemischt, sondern ausschließlich über eine gekühlte Ableitung in die CO₂-Abscheideeinheit 9 geleitet.

Durch die getrennte Kompression des rezirkulierten Abgases im Rahmen der Niederdruckkompressorstufe LP' wird der CO₂-Abscheideeinheit ein hoch verdichteter und vor allem konzentrationsreicher CO₂-Abgasstrom zugeführt, aus dem höchst effizient CO₂ abgeschieden werden kann. Der deutlich an CO₂-reduzierte Abgasstrom wird ebenfalls, wie bereits in den vorstehenden Ausführungsbeispielen beschrieben, zu Kühlzwecken der sequentiellen Brennkammer 4 sowie 4' sowie auch den Niederdruckturbinenstufen 5 sowie auch 5' zugeführt.

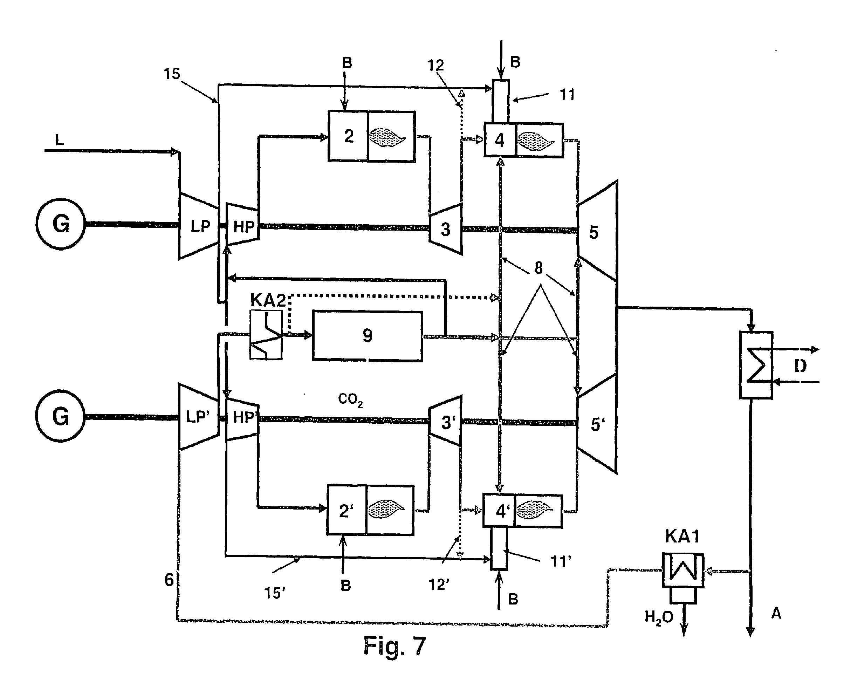

Mit Hilfe der in Fig. 6 dargestellten Gasturbinenanlage kann der CO₂-Anteil des aus der Gasturbinenanlage austretenden Abgasstrom A zwar deutlich reduziert werden, eine vollständige CO₂-Separation aus dem in die freie Atmosphäre austretenden Abgasstromes ist jedoch systembedingt nicht möglich. Dies liegt daran, dass Abgasanteile aus der Niederdruckturbinenstufe 5 im Abgasstrom A enthalten sind, die aufgrund fehlender Rezirkulation im Abgasstrom verbleiben. Um jedoch auch diese Anteile möglichst gering zu halten, sieht das letzte Ausführungsbeispiel gemäß Fig. 7 den Einsatz der partiellen Oxidation vor. Das in Fig. 7 dargestellte Prozessschema ist eine Weiterbildung des in Fig. 6 dargestellten Prozessschemas im Sinne der unter Bezugnahme auf Fig. 5 beschriebenen partiellen Oxidation. Auch im Ausführungsbeispiel gemäß Fig. 7 dient die Bypassleitung 15, 15' zur gezielten Sauerstoffzufuhr im Rahmen zwischen 20 und 75% des theoretischen Sauerstoffbedarfes für eine vollständige Oxidation, die in Verbindung mit der Wasserstofffreisetzung bedingt durch die katalytische Brennstoffumsetzung zu einem reaktiven, zündfähigen Gemisch führt, das einen stabilen Verbrennungsprozess gewährleistet.

### Bezugszeichenliste

- 1,1': Verbrennungszuluft-Kompressoreinheit
- 2, 2': Erste Brennkammer
- 3, 3': Hochdruckturbinenstufe
- 4, 4': Zweite Brennkammer, sequentielle Brennkammer
- 5, 5': Niederdruckturbinenstufe
- 6: Rezirkulationsleitung
- 7: Verdichtereinheit
- 8: Kühlleitung
- 9: CO₂-Abscheideeinheit
- 10: Ableitung
- 11: Oxidationseinheit
- 12: Ableitung
- 13: Rückführleitung
- 14: Umgehungsleitung
- 15: Bypassleitung
- A: Abgas
- D: Wärmetauschereinsheit
- KA1, KA2: Kühlereinheit
- G: Generator
- LP, LP': Niederdruckkompressorstufe
- HP, HP': Hochdruckkompressorstufe
- B: Brennstoff
- L: Zuluft
- S: Heißgasströmung
- W, W': Welle

## Patentansprüche

1. Wärmekraftanlage mit sequentieller Verbrennung und reduziertem CO₂-Ausstoß, die folgende über jeweils wenigstens einen Strömungskanal (S) in Serie miteinander verbundene Komponenten aufweist:
eine Verbrennungszuluft-Kompressoreinheit (1), eine erste Brennkammer (2), eine Hochdruckturbinenstufe (3), eine zweite Brennkammer (4) sowie eine Niederdruckturbinenstufe (5), wobei die zweite Brennkammer (4) und/oder die Niederdruckturbinenstufe (5) zu Kühlzwecken mit einem Kühlgasstrom versorgbar sind,
**dadurch gekennzeichnet, dass** eine Rezirkulationsleitung (6) vorgesehen ist, die wenigstens einen Teil eines aus der Niederdruckturbinenstufe (5) austretenden Abgasstroms einer Verdichtereinheit (7) zuführt,
dass eine Kühlleitung (8) vorgesehen ist, die wenigstens einen Teil des aus der Verdichtereinheit (7) austretenden komprimierten Abgasstroms als Kühlgasstrom der zweiten Brennkammer (4) und/oder der Niederdruckturbinenstufe (5) zu Kühlzwecken zuführt, und
dass in der Kühlleitung (8) eine CO₂-Abscheideeinheit (9) vorgesehen ist, die zumindest Anteile von CO₂ aus dem Kühlgasstrom separiert.

2. Wärmekraftanlage nach Anspruch 1,
**dadurch gekennzeichnet, dass** in der Kühlleitung (8) nach der Verdichtereinheit (7) und vor der CO₂-Abscheideeinheit (9) eine Kühleinheit KA2 vorgesehen ist.

3. Wärmekraftanlage nach Anspruch 1 oder 2,
**dadurch gekennzeichnet, dass** die Verbrennungszuluft-Kompressoreinheit (1) eine wenigstens zweistufige Kompressoreinheit ist, die einen Niederdruck- (LP) und einen Hochdruck-(HP) Kompressorteil aufweist, und
dass die Verdichtereinheit (7) dem Niederdruck-Kompressorteil (LP) der Verbrennungszuluft-Kompressoreinheit (1) entspricht

4. Wärmekraftanlage nach einem der Ansprüche 1 bis 3,
**dadurch gekennzeichnet, dass** stromab der CO₂-Separationseinheit (9) die Kühlleitung (8) eine Ableitung (10) vorsieht, die mit einer Oxidationseinheit (11) verbunden ist, durch die Brennstoff zur Befeuerung der zweiten Brennkammer (4) unter Freisetzung von Wasserstoff partiell oxidiert wird, bevor der partiell oxidierte Brennstoff innerhalb der zweiten Brennkammer zur Zündung gebracht wird.

5. Wärmekraftanlage nach Anspruch 4,
**dadurch gekennzeichnet, dass** zwischen der Hochdruckturbinenstufe (3) und der zweiten Brennkammer (4) eine Ableitung (12) im Strömungskanal (S) vorgesehen ist, die vor Eintritt in die Oxidationseinheit (11) in die Ableitung (10) mündet.

6. Wärmekraftanlage nach einem der Ansprüche 1 bis 5,
**dadurch gekennzeichnet, dass** die Verdichtereinheit (7), die Verbrennungszuluft-Kompressoreinheit (1), die Hoch- (3) und Niederdruckturbinenstufe (5) sowie ein Generator (G) auf einer gemeinsamen Welle (W) angeordnet sind.

7. Wärmekraftanlage nach einem der Ansprüche 1 bis 6,
**dadurch gekennzeichnet, dass** die Verbrennungszuluft-Kompressoreinheit (1) eine wenigstens zweistufige Kompressoreinheit ist, die einen Niederdruck- (LP) und einen Hochdruck-Kompressorteil (HP) aufweist, und dass in der Kühlleitung (8) stromauf und/oder stromab zur CO₂-Abscheideeinheit (9) wenigstens eine Rückführleitung (13) vorgesehen ist, die in den Hochdruck-Kompressorteil (HP) mündet.

8. Wärmekraftanlage nach einem der Ansprüche 1 bis 7,
**dadurch gekennzeichnet, dass** in der Kühlleitung (8) eine die CO₂-Abscheideeinheit (9) überbrückende Umgehungsleitung (14) vorgesehen ist.

9. Wärmekraftanlage nach einem der Ansprüche 4 bis 8,
**dadurch gekennzeichnet, dass** stromab zum Niederdruck-Kompressorteil (LP) eine Bypassleitung (15) vorgesehen ist, die mit einer Oxidationseinheit (11) verbunden ist, durch die Brennstoff zur Befeuerung der zweiten Brennkammer (4) wenigstens teilweise oxidiert wird, bevor der teilweise oxidierte Brennstoff innerhalb der zweiten Brennkammer zur Zündung gebracht wird.

10. Wärmekraftanlage nach einem der Ansprüche 1 bis 9,
**dadurch gekennzeichnet, dass** längs der Rezirkulationsleitung (6) eine Kühleinheit (KA1) vorgesehen ist, die Wasser aus dem Abgasstrom ausscheidet.

11. Wärmekraftanlage nach einem der Ansprüche 1 bis 10,
**dadurch gekennzeichnet, dass** längs der Rezirkulationsleitung (6) unmittelbar stromab der Niederdruckturbinenstufe (5) eine Wärmetauschereinheit D vorgesehen ist, zur Wärmeabgabe an einen Dampfkreislauf.

12. Wärmekraftanlage nach einem der Ansprüche 1 bis 11,
**dadurch gekennzeichnet, dass** die Wärmekraftanlage eine gestuft betriebene Gasturbinenanlage ist.

13. Wärmekraftantage nach einem der Ansprüche 1 bis 5 oder 7 bis 12,
**dadurch gekennzeichnet, dass** die Verbrennungszuluft-Kompressoreinheit (1), die Hoch- (3) und Niederdruckturbinenstufe (5) sowie ein Generator (G) auf einer gemeinsamen ersten Welle (W) und die Verdichtereinheit (7) auf einer zweiten, angetriebenen Welle angeordnet sind.

14. Wärmekraftanlage nach Anspruch 13,
**dadurch gekennzeichnet, dass** längs der zweiten Welle eine weitere Verbrennungszuluft-Kompressoreinheit (1'), eine weitere Hoch- (3') und Niederdruckturbinenstufe (5') sowie ein weiterer Generator (G') angeordnet sind.

15. Wärmekraftanlage nach Anspruch 14,
**dadurch gekennzeichnet, dass** die weitere Verbrennungszuluft-Kompressoreinheit (1'), die weitere Hoch- (3') und Niederdruckturbinenstufe (5') sowie der weitere Generator (G') in analoger Weise angeordnet und mit einander verschaltet sind, wie die Verbrennungszuluft-Kompressoreinheit (1), die Hoch- (3) und Niederdruckturbinenstufe (5) sowie der Generator (G) nach einem der Ansprüche 1 bis 12.

16. Verfahren zum Betreiben einer Wärmekraftanlage mit sequentieller Verbrennung und reduziertem CO₂-Ausstoß, die folgende über jeweils wenigstens einen Strömungskanal (S) in Serie miteinander verbundene Komponenten aufweist: eine Verbrennungszuluft-Kompressoreinheit (1), eine erste Brennkammer (2), eine Hochdruckturbinenstufe (3), eine zweite Brennkammer (4) sowie eine Niederdruckturbinenstufe (5), wobei die zweite Brennkammer (4) und/oder die Niederdruckturbinenstufe (5) zu Kühlzwecken mit einem Kühlgasstrom versorgt wird, **dadurch gekennzeichnet, dass** wenigstens ein Teil des aus der Niederdruckturbinenstufe austretenden Abgases rezirkuliert, verdichtet und einer CO₂-Abscheidung, zur Gewinnung von CO₂ zugeführt wird und dass der CO₂ abgereicherte Abgasstrom als Kühlgasstrom zur Kühlung der zweiten Brennkammer und/oder der Niederdruckturbinenstufe bereitgestellt wird.

17. Verfahren nach Anspruch 16,
**dadurch gekennzeichnet, dass** das aus der Niederdruckturbinenstufe (5) austretende Abgas einem Wärmtauscher D zur thermischen Kopplung eines Dampfkreislaufes und/oder einer Kühleinheit (KA1) zugeführt wird bevor das rezirkulierte Abgas verdichtet wird.

18. Verfahren nach einem der Ansprüche 16 bis 17,
**dadurch gekennzeichnet, dass** das rezirkulierte Abgas zur Verdichtung gemeinsam mit der Verbrennungszuluft in die Verbrennungszuluft-Kompressoreinheit (1) eingeleitet wird.

19. Verfahren nach Anspruch 18,
**dadurch gekennzeichnet, dass** die Verdichtung gestuft erfolgt, und
dass nach Erreichen einer ersten Verdichtungsstufe ein Teil des vorverdichteten Abgas-/Verbrennungszutuft-Gemisches abgezweigt, gekühlt und der CO₂-Abscheidung zugeführt wird.

20. Verfahren nach einem der Ansprüche 16 bis 19,
**dadurch gekennzeichnet, dass** ein Teil des CO₂ abgereicherten Abgasstroms mit Brennstoff gemischt wird, wobei wenigsten Teile des Brennstoffes unter Bildung von Wasserstoff oxidiert werden, bevor das Gemisch aus CO₂ abgereicherten Abgas und teiloxidiertem Brennstoff in der zweiten Brennkammer zur Zündung gebracht wird.

21. Verfahren nach Anspruch 20,
**dadurch gekennzeichnet, dass** ein Teil eines aus der Hochdruckturbinenstufe (3) austretenden Heissgasstromes (S) mit dem CO₂ abgereicherten Muss folgerichtig "abgereicherten" heissen Abgasstrom vermischt wird, und
dass das Gemisch aus dem Heissgasstrom und dem CO₂ abgereicherten Abgasstrom mit Brennstoff gemischt und anschließend unter Freisetzung von Wasserstoff partiell oxidiert wird.

22. Verfahren nach Anspruch 20 oder 21,
**dadurch gekennzeichnet, dass** das Gemisch aus CO₂ abgereicherten Abgas und dem teiloxidierten Brennstoff derart gewählt wird, dass der vorhandene Sauerstoffanteil etwa 20 % bis 75 % des theoretischen Sauerstoffbedarf für eine vollständige Verbrennung entspricht.

23. Verfahren nach einem der Ansprüche 16 bis 17,
**dadurch gekennzeichnet, dass** das rezirkulierte Abgas separat zur Verbrermungszuluft verdichtet, gekühlt und der CO₂-Abscheidung zugeführt wird.

24. Verfahren nach Anspruch 23,
**dadurch gekennzeichnet, dass** das verdichtete Abgas, das verdichtete gekühlte Abgas oder das verdichtete, gekühlte und CO₂ abgereicherte Abgase zumindest teilweise der vorverdichten Verbrennungszuluft beigemischt wird.

25. Verfahren nach Anspruch 24,
**dadurch gekennzeichnet, dass** ein Teil der vorverdichteten Verbrennungszuluft mit Brennstoff gemischt wird, wobei wenigsten Teile des Brennstoffes unter Bildung von Wasserstoff oxidiert werden, bevor das Gemisch aus CO₂ abgereicherten Abgas und teiloxidierten Brennstoff in der zweiten Brennkammer zur Zündung gebracht wird.

## Claims

1. Thermal power plant with sequential combustion and reduced CO₂ emissions, which includes the following components, which are connected in series via in each case at least one flow passage (S):
a combustion feed air compressor unit (1), a first combustion chamber (2), a high-pressure turbine stage (3), a second combustion chamber (4) and a low-pressure turbine stage (5), it being possible for the second combustion chamber (4) and/or the low-pressure turbine stage (5) to be supplied with a cooling gas stream for cooling purposes,
**characterized in that** there is a recirculation line (6) which feeds at least some of the exhaust-gas stream emerging from the low-pressure turbine stage (5) to a compressor unit (7),
**in that** there is a cooling line (8), which feeds at least some of the compressed exhaust-gas stream emerging from the compressor unit (7) to the second combustion chamber (4) and/or the low-pressure turbine stage (5) as a cooling gas stream for cooling purposes, and
**in that** a CO₂ separation unit (9), which separates at least fractions of CO₂ out of the cooling gas stream, is provided in the cooling line (8).

2. Thermal power plant according to Claim 1, **characterized in that** a cooling unit KA2 is provided in the cooling line (8) downstream of the compressor unit (7) and upstream of the CO₂ separation unit (9).

3. Thermal power plant according to Claim 1 or 2, **characterized in that** the combustion feed air compressor unit (1) is an at least two-stage compressor unit including a low-pressure compressor part (LP) and a high-pressure compressor part (HP) and
**in that** the compressor unit (7) corresponds to the low-pressure compressor part (LP) of the combustion feed air compressor unit (1).

4. Thermal power plant according to one of Claims 1 to 3, **characterized in that** downstream of the CO₂ separation unit (9) the cooling line (8) provides an outlet line (10) which is connected to an oxidation unit (11), by which a fuel for firing the second combustion chamber (4) is partially oxidized, releasing hydrogen, before the partially oxidized fuel is ignited within the second combustion chamber.

5. Thermal power plant according to Claim 4, **characterized in that** an outlet line (12) is provided in the flow passage (S) between the high-pressure turbine stage (3) and the second combustion chamber (4), which outlet line (12) opens out into the outlet line (10) before it enters the oxidation unit (11).

6. Thermal power plant according to one of Claims 1 to 5, **characterized in that** the compressor unit (7), the combustion feed air compressor unit (1), the high-pressure turbine stage (3) and low-pressure turbine stage (5) as well as a generator (G) are arranged on a common shaft (W).

7. Thermal power plant according to one of Claims 1 to 6, **characterized in that** the combustion feed air compressor unit (1) is an at least two-stage compressor unit which includes a low-pressure compressor part (LP) and a high-pressure compressor part (HB), and **in that** at least one return line (13), which opens out into the high-pressure compressor part (HP), is provided in the cooling line (8) upstream and/or downstream of the CO₂ separation unit (9).

8. Thermal power plant according to one of Claims 1 to 7, **characterized in that** a bypass line (14), which bypasses the CO₂ separation unit (9) is provided in the cooling line (8).

9. Thermal power plant according to one of Claims 4 to 8, **characterized in that** downstream of the low-pressure compressor part (LP) there is a bypass line (15) which is connected to an oxidation unit (11), by which fuel for firing the second combustion chamber (4) is at least partially oxidized before the partially oxidized fuel is ignited within the second combustion chamber.

10. Thermal power plant according to one of Claims 1 to 9, **characterized in that** a cooling unit (KA1), which separates water out of the exhaust gas stream, is provided along the recirculation line (6).

11. Thermal power plant according to one of Claims 1 to 10, **characterized in that** a heat exchanger unit (D) for releasing heat to a steam cycle is provided along the recirculation line (6), immediately downstream of the low-pressure turbine stage (5).

12. Thermal power plant according to one of Claims 1 to 11, **characterized in that** the thermal power plant is a gas turbine installation with stepped operation.

13. Thermal power plant according to one of Claims 1 to 5 or 7 to 12, **characterized in that** the combustion feed air compressor unit (1), the high-pressure turbine stage (3) and low-pressure turbine stage (5) as well as a generator (G) are arranged on a common first shaft (W) and the compressor unit (7) is arranged on a second, driven shaft.

14. Thermal power plant according to Claim 13, **characterized in that** a further combustion feed air compressor unit (1'), a further high-pressure turbine stage (3') and a further low-pressure turbine stage (5'), as well as a further generator (G'), are arranged along the second shaft.

15. Thermal power plant according to Claim 14, **characterized in that** the further combustion feed air compressor unit (1'), the further high-pressure turbine stage (3') and the further low-pressure turbine stage (5'), as well as the further generator (G'), are arranged and connected to one another in a similar way to the combustion feed air compressor unit (1), the high-pressure turbine stage (3) and the low-pressure turbine stage (5) as well as the generator (G) described in one of Claims 1 to 12.

16. Method for operating a thermal power plant with sequential combustion and reduced CO₂ emissions, which includes the following components, connected in series via in each case at least one flow passage (S):
a combustion feed air compressor unit (1), a first combustion chamber (2), a high-pressure turbine stage (3), a second combustion chamber (4) and a low-pressure turbine stage (5), the second combustion chamber (4) and/or the low-pressure turbine stage (5) being supplied with a cooling gas stream for cooling purposes,
**characterized in that** at least some of the exhaust gas emerging from the low-pressure turbine stage is recirculated, compressed and fed to a CO₂ separation, to obtain CO₂, and **in that** the CO₂ depleted exhaust gas stream is provided as cooling gas stream for cooling the second combustion chamber and/or the low-pressure turbine stage.

17. Method according to Claim 16, **characterized in that** the exhaust gas which emerges from the low-pressure turbine stage (5) is fed to a heat exchanger D for thermally coupling a steam cycle and/or a cooling unit (KA1) before the recirculated exhaust gas is compressed.

18. Method according to one of Claims 16 to 17, **characterized in that** the recirculated exhaust gas is fed into the combustion feed air compressor unit (1) in order to be compressed together with the combustion feed air.

19. Method according to Claim 18, **characterized in that** the compression takes place in stages, and
**in that** after a first compression stage has been reached, part of the precompressed exhaust gas/combustion feed air mixture is branched off, cooled and fed to the CO₂ separation.

20. Method according to one of Claims 16 to 19, **characterized in that** some of the CO₂-depleted exhaust gas stream is mixed with fuel, at least parts of the fuel being oxidized to form hydrogen before the mixture of CO₂-depleted exhaust gas and partially oxidized fuel is ignited in the second combustion chamber.

21. Method according to Claim 20, **characterized in that** part of a hot gas stream (S) which emerges from the high-pressure turbine stage (3) is mixed with the CO₂-depleted exhaust gas stream, and
**in that** the mixture of the hot gas stream and the CO₂-depleted exhaust gas stream is mixed with fuel and then partially oxidized, with hydrogen being released.

22. Method according to Claim 20 or 21, **characterized in that** the mixture of CO₂-depleted exhaust gas and the partially oxidized fuel is selected in such a manner that the oxygen fraction present corresponds to approximately 20% to 75% of the theoretical oxygen demand for complete combustion.

23. Method according to one of Claims 16 to 17, **characterized in that** the recirculated exhaust gas is, separately from the combustion feed air, compressed, cooled and fed to the CO₂ separation.

24. Method according to Claim 23, **characterized in that** the compressed exhaust gas, the compressed cooled exhaust gas or the compressed, cooled and CO₂-depleted exhaust gas is at least partially admixed with the precompressed combustion feed air.

25. Method according to Claim 24, **characterized in that** some of the precompressed combustion feed air is mixed with fuel, at least parts of the fuel being oxidized to form hydrogen before the mixture of CO₂-depleted exhaust gas and partially oxidized fuel is ignited in the second combustion chamber.

## Revendications

1. Centrale électrique thermique à combustion séquentielle et émission réduite de CO₂, qui présente les composants suivants, reliés les uns aux autres en série, chaque fois par au moins un canal d'écoulement (S) :
une unité (1) de compression de l'air amené à la combustion, une première chambre de combustion (2), un étage (3) de turbine à haute pression, une deuxième chambre de combustion (4) ainsi qu'un étage (5) de turbine à basse pression, la deuxième chambre de combustion (4) et/ou l'étage (5) de turbine à basse pression pouvant être alimentés en un écoulement de gaz froid pour être refroidis,
**caractérisée en ce que**
elle présente un conduit de recirculation (6) qui amène à une unité de compression (7) au moins une partie d'un écoulement de gaz d'échappement sortant de l'étage (5) de turbine à basse pression,
**en ce qu'**elle présente un conduit de refroidissement (8) qui amène à la deuxième chambre de combustion (4) et/ou à l'étage (5) de turbine à basse pression au moins une partie de l'écoulement de gaz d'échappement comprimé qui sort de l'unité de compression (7) en tant qu'écoulement de gaz froid servant au refroidissement et
**en ce que** le conduit de refroidissement (8) présente une unité (9) de séparation de CO₂ qui extrait au moins une partie du CO₂ hors de l'écoulement de gaz froid.

2. Centrale électrique thermique selon la revendication 1, **caractérisée en ce qu'**une unité de refroidissement KA2 est prévue dans le conduit de refroidissement (8) en aval de l'unité de compression (7) et en amont de l'unité (9) de séparation de CO₂.

3. Centrale électrique thermique selon les revendications 1 ou 2, **caractérisée en ce que** l'unité (1) de compression de l'air amené à la combustion est une unité de compression présentant au moins deux étages, à savoir une partie de compression à basse pression (LP) et une partie de compression à haute pression (HP), et **en ce que** l'unité de compression (7) correspond à la partie de compression à basse pression (LP) de l'unité (1) de compression de l'air amené à la combustion.

4. Centrale électrique thermique selon l'une des revendications 1 à 3, **caractérisée en ce qu'**en aval de l'unité (9) de séparation du CO₂, le conduit de refroidissement (8) présente une branche (10) reliée à une unité d'oxydation (11) par laquelle le combustible destiné à alimenter la deuxième chambre de combustion (4) est oxydé partiellement avec libération d'hydrogène avant que le combustible partiellement oxydé soit amené à s'allumer dans la deuxième chambre de combustion.

5. Centrale électrique thermique selon la revendication 4, **caractérisée en ce qu'**une branche (12) est prévue dans le canal d'écoulement (S) entre l'étage (3) de turbine à haute pression et la deuxième chambre de combustion (4) et débouche dans la branche (10) avant l'entrée de cette dernière dans l'unité d'oxydation (11).

6. Centrale électrique thermique selon l'une des revendications 1 à 5, **caractérisée en ce que** l'unité de compression (7), l'unité (1) de compression de l'air amené à la combustion, l'étage (3) de turbine à haute pression et l'étage (5) de turbine à basse pression ainsi qu'un générateur (G) sont disposés sur un arbre (W) commun.

7. Centrale électrique thermique selon l'une des revendications 1 à 6, **caractérisée en ce que** l'unité (1) de compression de l'air amené à la combustion est une unité de compression qui présente au moins deux étages, à savoir une partie de compression à basse pression (LP) et une partie de compression à haute pression (HP), et **en ce qu'**au moins un conduit de renvoi (13) qui débouche dans la partie de compression à haute pression (HP) est prévu dans le conduit de refroidissement (8) en amont et/ou en aval de l'unité (9) de séparation de CO₂.

8. Centrale électrique thermique selon l'une des revendications 1 à 7, **caractérisée en ce qu'**un conduit de contournement (14) qui contourne l'unité (9) de séparation de CO₂ est prévu dans le conduit de refroidissement (8).

9. Centrale électrique thermique selon l'une des revendications 1 à selon l'une des revendications 4 à 8, **caractérisée en ce qu'**un conduit de dérivation (15) relié à une unité d'oxydation (11) par laquelle le carburant destiné à alimenter la deuxième chambre de combustion (4) est oxydé au moins partiellement avant que le combustible partiellement oxydé soit amené à s'allumer à l'intérieur de la deuxième chambre de combustion est prévu en aval de la partie de compression à basse pression (LP).

10. Centrale électrique thermique selon l'une des revendications 1 à 9, **caractérisée en ce qu'**une unité de refroidissement (KA1) qui sépare l'eau de l'écoulement de gaz d'échappement est prévue sur le circuit de recirculation (6).

11. Centrale électrique thermique selon l'une des revendications 1 à 10, **caractérisée en ce qu'**une unité d'échange de chaleur D qui délivre de la chaleur à un circuit de vapeur est prévue sur le conduit de recirculation (6) immédiatement en aval de l'étage (5) de turbine à basse pression.

12. Centrale électrique thermique selon l'une des revendications 1 à 11, **caractérisée en ce que** la centrale électrique thermique est une installation de turbine à gaz à conduite étagée.

13. Centrale électrique thermique selon l'une des revendications 1 à 5 ou 7 à 12, **caractérisée en ce que** l'unité (1) de compression de l'air amené à la combustion, l'étage (3) de turbine à haute pression et l'étage (5) de turbine à basse pression ainsi qu'un générateur (G) sont disposés sur un premier arbre (W) commun, l'unité de compression (7) étant disposée sur un deuxième arbre entraîné.

14. Centrale électrique thermique selon la revendication 13, **caractérisée en ce qu'**une autre unité (1') de compression de l'air amené à la combustion, un autre étage de turbine à haute pression (3') et un autre étage de turbine à basse pression (5') ainsi qu'un autre générateur (G') sont disposés sur le deuxième arbre.

15. Centrale électrique thermique selon la revendication 14, **caractérisée en ce que** l'autre unité (1') de compression de l'air amené à la combustion, l'autre étage (3') de turbine à haute pression et l'autre étage (5') de turbine à basse pression ainsi que l'autre générateur (G') sont disposés et raccordés les uns aux autres de la même manière que l'unité (1) de compression de l'air amené à la combustion, l'étage (3) de turbine à haute pression et l'étage (5) de turbine à basse pression et le générateur (G) selon l'une des revendications 1 à 12.

16. Procédé de conduite d'une centrale électrique thermique à combustion séquentielle et émission réduite de CO₂, qui présente les composants suivants reliés les uns aux autres en série, chaque fois par au moins un canal d'écoulement (S) :
une unité (1) de compression de l'air amené à la combustion, une première chambre de combustion (2), un étage (3) de turbine à haute pression, une deuxième chambre de combustion (4) ainsi qu'un étage (5) de turbine à basse pression, la deuxième chambre de combustion (4) et/ou l'étage (5) de turbine à basse pression étant alimentés en un écoulement de gaz froid pour être refroidis,
**caractérisé en ce que**
au moins une partie des gaz d'échappement qui sortent de l'étage de turbine à basse pression est recirculée, comprimée et amenée à une séparation du CO₂ en vue de récupérer du CO₂ et **en ce que** l'écoulement de gaz d'échappement enrichi en CO₂ est utilisé comme écoulement de gaz froid qui refroidit la deuxième chambre de combustion et/ou l'étage de turbine à basse pression.

17. Procédé selon la revendication 16, **caractérisé en ce que** les gaz d'échappement qui sortent de l'étage (5) de turbine à basse pression sont amenés à un échangeur de chaleur D en vue de coupler thermiquement un circuit de vapeur et/ou une unité de refroidissement (KA1) avant que les gaz d'échappement recirculés soient comprimés.

18. Procédé selon l'une des revendications 16 et 17, **caractérisé en ce que** les gaz d'échappement recirculés sont introduits dans l'unité (1) de compression de l'air amené à la combustion pour être comprimés en même temps que l'air amené à la combustion.

19. Procédé selon la revendication 18, **caractérisé en ce que** la compression s'effectue par étages et **en ce qu'**après avoir atteint un premier étage de compression, une partie du mélange précomprimé de gaz d'échappement et d'air amené à la combustion est séparée, refroidie et amenée à la séparation du CO₂.

20. Procédé selon l'une des revendications 16 à 19, **caractérisé en ce qu'**une partie de l'écoulement de gaz d'échappement appauvri en CO₂ est mélangée avec du combustible, au moins une partie du combustible étant oxydée en formant de l'hydrogène avant que le mélange de gaz d'échappement appauvri en CO₂ et de combustible partiellement oxydé soit amené à s'allumer dans la deuxième chambre de combustion.

21. Procédé selon la revendication 20, **caractérisé en ce qu'**une partie d'un écoulement de gaz chaud (S) qui sort de l'étage (3) de turbine à haute pression est mélangée avec l'écoulement de gaz d'échappement appauvri en CO₂ et **en ce que** le mélange formé de l'écoulement de gaz chaud et de l'écoulement de gaz d'échappement appauvri en CO₂ est mélangé avec du combustible et est ensuite partiellement oxydé avec libération d'hydrogène.

22. Procédé selon les revendications 20 ou 21, **caractérisé en ce que** le mélange des gaz d'échappement appauvris en CO₂ et du combustible partiellement oxydé est sélectionné de telle sorte que la teneur en oxygène corresponde à environ 20 % à 75 % des besoins théoriques en oxygène d'une combustion complète.

23. Procédé selon l'une des revendications 16 et 17, **caractérisé en ce que** les gaz d'échappement recirculés sont comprimés, refroidis et apportés à la séparation du CO₂ séparément de l'air amené à la combustion.

24. Procédé selon la revendication 23, **caractérisé en ce qu'**au moins une partie des gaz d'échappement comprimés, des gaz d'échappement refroidis et comprimés ou des gaz d'échappement comprimés, refroidis et appauvris en CO₂ sont ajoutés à l'air pré-comprimé amené à la combustion.

25. Procédé selon la revendication 24, **caractérisé en ce qu'**une partie de l'air pré-comprimé amené à la combustion est mélangée avec du combustible, au moins une partie du combustible étant oxydée avec formation d'hydrogène avant que le mélange formé de gaz d'échappement appauvri en CO₂ et de combustible partiellement oxydé soit amené à s'allumer dans la deuxième chambre de combustion.
